# EUROPEAN PATENT APPLICATION

(11) **EP 2 815 944 A1**
(43) Date of publication of application: **24.12.2014**
(21) Application number: 12868339.8
(22) Date of filing: 14.02.2012
(51) Int. Cl.: B60W 10/08, B60K 6/48, B60K 6/547, B60W 20/00

(54) **HYBRID VEHICLE CONTROL APPARATUS**

(71) Applicant: TOYOTA JIDOSHA KABUSHIKI KAISHA, Toyota-shi, Aichi-ken, 471-8571 (JP)
(72) Inventor: TAKAHASHI, Tomoya, Toyota-shi Aichi 471-8571 (JP); MURAKAMI, Koji, Toyota-shi Aichi 471-8571 (JP); TANAKA, Takaaki, Toyota-shi Aichi 471-8571 (JP)
(74) Representative: Smith, Samuel Leonard
(86) International application number: PCT/JP2012/053388
(87) International publication number: WO 2013/121525

(57) **Abstract**

A control apparatus is applied to a hybrid vehicle (1). The hybrid vehicle (1) includes: a manual transmission (10) for changing a state of shift stages in response to an operation of a shift lever (30); an MG (3) being connected with an input shaft (11) of the manual transmission (10) via a friction type first clutch (30) actuating in response to an operation of stepping on a clutch pedal (CP); and an internal combustion engine (2) being connected with a rotor shaft (3a) of the MG (3) via a second clutch (31). The control apparatus limits torque of the MG (3) so that a difference between a rotating speed of the input shaft (11) of the manual transmission (10) and a rotating speed of the rotor shaft (3a) of the MG (3) is equal to or less than a predetermined determination value, when an EV traveling mode where a state of the second clutch (31) is switched to a release state and the vehicle is driven by the MG (3) is executed.

## Description

### Technical Field

The present invention relates to a control apparatus applied to a hybrid vehicle having an internal combustion engine and an electric motor as power sources, where powers of the power sources are transmitted to an input shaft of a manual transmission via a common manual-type clutch.

### Background Art

There is known a hybrid vehicle having an internal combustion engine and an electric motor as power sources, where powers of the power sources are transmitted to drive wheels via a manual transmission. For example, there is known a hybrid vehicle where a rotor shaft of the electric motor is connected to an input shaft of the manual transmission via a manual-type clutch which is operated by a clutch pedal, and an output shaft of the internal combustion engine is connected to the rotor shaft via an automatic clutch (see Patent Literature 1). In addition, there are Patent Literatures 2, 3 as prior art references in relation to the present invention.

### Citation List

### Patent Literature

Patent Literature 1: JP 2011-183847 A
Patent Literature 2: JP 2010-254014 A
Patent Literature 3: JP 2001-074135 A

### Summary of Invention

### Technical Problem

In the vehicle of the Patent Literature 1, by releasing the automatic clutch to separate the electric motor and the internal combustion engine from each other, it is possible to drive the vehicle by the electric motor only. Even in this case, a driver is able to operate the manual-type clutch by operating the clutch pedal. Thereby, even in a case that the vehicle is driven by the electric motor, there is a possibility that a state of the manual-type clutch is opretated to go into a state where power is transmitted between the input shaft of the manual transmission and the rotor shaft of the electric motor while the input shaft and the rotor shaft rotate at different rotating speeds from each other, that is, a state of a half clutch. In this case, since energy is wasted in the clutch when the rotating speed of the electric motor is increased based on an accelerator opening, there is a possibility that a fuel efficiency is reduced. As a method for suppressing a waste of the energy like this, there is a method that it is detected how the manual-type clutch is operated by the driver, and the electric motor is controlled base on the detection result. However, in this method, since a sensor for detecting an operating state of the clutch is necessary, there is a possibility that the costs are increased.

In view of the foregoing, one object of the present invention is to provide a control apparatus for a hybrid vehicle capable of improving fuel efficiency while suppressing increase of costs.

### Solution to Problem

A control apparatus of the present invention is applied to a hybrid vehicle, the hybrid vehicle including: a manual transmission having plural shift stages where different gear ratios from each other are set and the shift stages are switched from each other in response to an operation of a shift lever; a rotating member being connected with an input shaft of the manual transmission via a friction type first clutch actuating in response to an operation of stepping on a clutch pedal; an electric motor being connected with the rotating member so as to be allowed to transmit power; and an internal combustion engine being connected with the rotating member via a second clutch, wherein the control apparatus includes a control device which controls operations of the electric motor, the internal combustion engine, and the second clutch, and the control device includes a torque limiting device which limits torque of the electric motor so that a difference between a rotating speed of the input shaft of the manual transmission and a rotating speed of the rotating member is equal to or less than a predetermined determination value, when an EV traveling mode where a state of the second clutch is switched to a release state where power transmission between the internal combustion engine and the rotating member is shut off and the vehicle is driven by the electric motor is executed.

In the control apparatus of the present invention, the first clutch is a friction type clutch. Thereby, the first clutch is allowed to switch a state where power is transmitted between the input shaft of the manual transmission and the rotating member while the input shaft and the rotating member rotate at different rotating speeds from each other, that is, a state of a half clutch. Furthermore, as well known, in the friction type clutch, when the clutch is in the half clutch, a part of the energy which is input to the clutch is consumed by converting friction heat. And, the energy which is consumed by the friction heat increases as a difference between a rotating speed which is input to the clutch and a rotating speed which is output from the clutch increases. According to the control apparatus of the present invention, when the EV traveling mode is executed, the difference between the rotating speed of the input shaft of the manual transmission and the rotating speed of the rotating member is adjusted so that the difference is equal to or less than the determination value. Thereby, by setting the determination value appropriately, it is possible to decrease the energy which is consumed in the first clutch, when the first clutch goes into the half clutch. Accordingly, it is possible to improve fuel efficiency of the vehicle. Furthermore, by decreasing the difference between the rotating speed of the input shaft of the manual transmission and the rotating speed of the rotating member in this manner, it is possible to extend the life of the first clutch. In addition, in the control apparatus of the present invention, it is not necessary to prepare a sensor for detecting a state of the first clutch. Thereby, it is possible to suppress increase of the costs.

In one embodiment of the control apparatus of the present invention, the control device may further include a determination value setting device which sets the determination value based on a traveling state of the vehicle, and the determination value setting device, when the EV traveling mode is executed, may estimate a rotating speed of the internal combustion engine in a present traveling state of the vehicle based on the traveling state of the vehicle on an assumption that the vehicle is driven by the internal combustion engine; and may set the determination value to a value obtained by subtracting a present rotating speed of the input shaft of the manual transmission from the rotating speed estimated. According to this embodiment, it is possible to decrease energy which is consumed in the first clutch when the vehicle is driven by the electric motor than energy which is consumed in the first clutch when the vehicle is driven by the internal combustion engine.

### Brief Description of Drawings

Fig. 1 is a schematic diagram showing a vehicle where a control apparatus according to one embodiment of the present invention is incorporated.
Fig. 2 is a diagram showing a shift pattern of a shift lever of a transmission.
Fig. 3 is a diagram showing plural pedals provided on the vehicle.
Fig. 4 is a flowchart showing an MG control routine executed by the control apparatus.
Fig. 5 is a graph showing temporal variations of an amount of a clutch stroke of a first clutch, a rotating speed of an MG, and a rotating speed of an input shaft of a transmission at a time when the vehicle starts off.

### Description of Embodiments

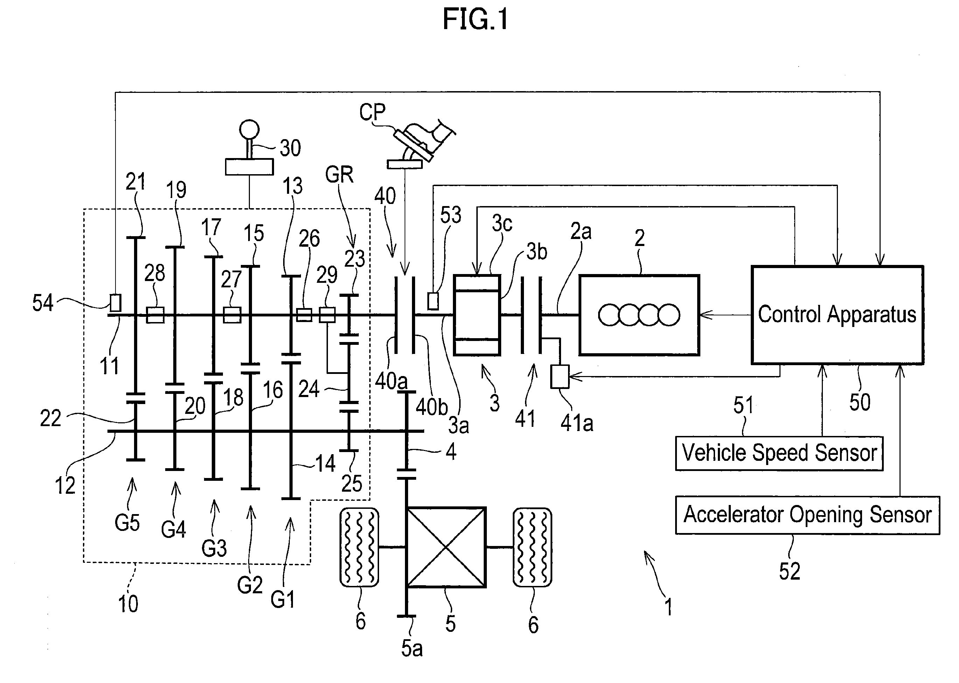

Fig. 1 schematically shows a vehicle where a control apparatus according to one embodiment of the present invention is incorporated. The vehicle 1 includes an internal combustion engine (hereinafter, referred to as an engine) 2 and a motor generator (hereinafter, referred to as an MG) 3 as an electric motor, as power sources for travelling. That is, the vehicle 1 is configured as a hybrid vehicle. The engine 2 is a well known spark ignition type internal combustion engine which has four cylinders. The MG 3 is a well known motor generator which is mounted on the hybrid vehicle to function as an electric motor and a generator. The MG 3 includes a rotor 3b which rotates integrally with a rotor shaft 3a and a stator 3c which is arranged on an outer circumference of the rotor 3b coaxially and is fixed to a case (not shown).

A manual transmission (hereinafter, referred to as a transmission) 10 providing one-five forward shift stages is mounted on the vehicle 1. The transmission 10 includes an input shaft 11 and an output shaft 12. First to fifth gear pairs G1 to G5 and a reverse gear group GR are provided between the input shaft 11 and the output shaft 12. The first gear pair G1 consists of a first drive gear 13 and a first driven gear 14 which engage with each other. The second gear pair G2 consists of a second drive gear 15 and a second driven gear 16 which engage with each other. The third gear pair G3 consists of a third drive gear 17 and a third driven gear 18 which engage with each other. The fourth gear pair G4 consists of a fourth drive gear 19 and a fourth driven gear 20 which engage with each other. The fifth gear pair G5 consists of a fifth drive gear 21 and a fifth driven gear 22 which engage with each other. The first to fifth gear pairs G1 to G5 are provided so that the drive gear and the driven gear engage with each other at all times. Gear ratios are set to the gear pairs G1 to G5 respectively, each of the gear ratios differing from each other. The gear ratios are set so as to get smaller in the order of the first gear pair G1, the second gear pair G2, the third gear pair G3, the fourth gear pair G4, and the fifth gear pair G5. The reverse gear group GR consists of a reverse drive gear 23, an intermediate gear 24, and a reverse driven gear 25.

The first to fifth drive gears 13, 15, 17, 19, and 21 are supported on the input shaft 11 so as to be rotatable relatively to the input shaft 11. The reverse drive gear 23 is fixed on the input shaft 11 so as to rotate integrally with the input shaft 11. As shown in this figure, these gears are arranged so as to be aligned in an axis direction in the order of the reverse drive gear 23, the first drive gear 13, the second drive gear 15, the third drive gear 17, the fourth drive gear 19, and the fifth drive gear 21. The first to fifth driven gears 14, 16, 18, 20, and 22 and the reverse driven gear 25 are fixed on the output shaft 12 so as to rotate integrally with the output shaft 12.

First to fourth sleeves 26 to 29 are provided on the input shaft 11. The first to third sleeves 26 to 28 are supported on the input shaft 11 so as to rotate integrally with the input shaft 11 and to move in the axis direction. The fourth sleeve 29 is supported on the input shaft 11 so as to be rotatable relatively to the input shaft 11 and to move in the axis direction. The first sleeve 26 and the fourth sleeve 29 are provided between the first drive gear 13 and the reverse drive gear 23. The second sleeve 27 is provided between the second drive gear 15 and the third drive gear 17. The third sleeve 28 is provided between the fourth drive gear 19 and the fifth drive gear 21.

The first sleeve 26 is provided so as to be allowed to switch between a first gear position and a release position. At the first gear position, the first sleeve 26 engages with the first drive gear 13 so that the input shaft 11 and the first drive gear 13 rotate integrally with each other. At the release position, the engagement between the first sleeve 26 and the first drive gear 13 is released. The second sleeve 27 is provided so as to be allowed to switch among a second gear position, a third gear position, and a release position. At the second gear position, the second sleeve 27 engages with the second drive gear 15 so that the input shaft 11 and the second drive gear 15 rotate integrally with each other. At the third gear position, the second sleeve 27 engages with the third drive gear 17 so that the input shaft 11 and the third drive gear 17 rotate integrally with each other. At the release position, the second sleeve 27 engages with neither the second drive gear 15 nor the third drive gear 17. The third sleeve 28 is provided so as to be switchable among a fourth gear position, a fifth gear position, and a release position. At the fourth gear position, the third sleeve 28 engages with the fourth drive gear 19 so that the input shaft 11 and the fourth drive gear 19 rotate integrally with each other. At the fifth gear position, the second sleeve 28 engages with the fifth drive gear 21 so that the input shaft 11 and the fifth drive gear 21 rotate integrally with each other. At the release position, the third sleeve 28 engages with neither the fourth drive gear 19 nor the fifth drive gear 21. Although not shown, plural synchronization mechanisms are provided on the input shaft 11. Each of the plural synchronization mechanisms synchronizes between a rotating speed of each of the first to third sleeves 26 to 28 and a rotating speed of each of the first to fifth drive gears 13, 15, 17, 19, or 21 when each of the first to third sleeves 26 to 28 and each of the first to fifth drive gears 13, 15, 17, 19, or 21 are engaged. Each of the plural synchronization mechanisms may be provided as a synchronization mechanism which synchronizes rotating speeds by using a frictional engagement, for example a key synchromesh mechanism already well known. Thereby, a detailed description of the synchronization mechanism will be omitted.

The fourth sleeve 29 supports the intermediate gear 24 so as to be rotatable. The intermediate gear 24 moves in the axis direction with the fourth sleeve 29. The fourth sleeve 29 is provided so as to be allowed to switch between a reverse position and a release position. At the reverse position, the intermediate gear 24 engages with the reverse drive gear 23 and the reverse driven gear 25. At the release position, the engagements between the intermediate gear 24 and the gears 23, 25 are released.

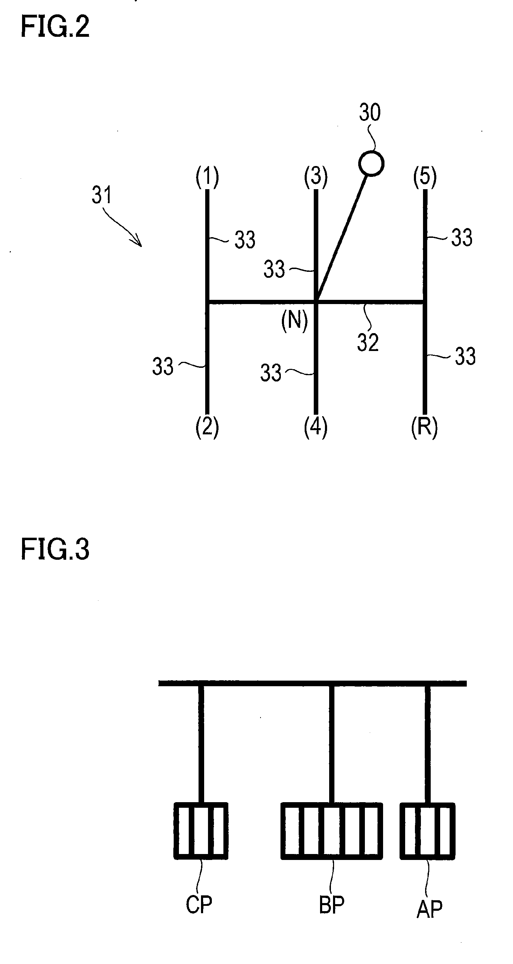

Each sleeve 26 to 29 of the transmission 10 is connected to a shift lever 30 which is operated by a driver. Fig. 2 shows a shift pattern 31 of the shift lever 30. The shift pattern 31 includes a selection passage 32 which extends in a right and left direction of this figure and six shift passages 33 which extend in an up and down direction of the figure from the selection passage 32. The shift lever 30 is provided so as to be allowed to move on the selection passage 32 and the shift passages 33. As shown in this figure, first to fifth gears and a reverse R are set to the six shift passages 33. A neutral position N is set on the selection passage 32.

In the shift pattern 31, when the shift lever 30 is moved to the first gear, the position of the first sleeve 26 is switched to the first gear position and the position of each of the second to fourth sleeves 27 to 29 is switched to the release position. When the shift lever 30 is moved to the second gear, the position of the second sleeve 27 is switched to the second gear position and the position of each of the first sleeve 26, the third sleeve 28, and the fourth sleeve 29 is switched to the release position. When the shift lever 30 is moved to the third gear, the position of the second sleeve 27 is switched to the third gear position and the position of each of the first sleeve 26, the third sleeve 28, and the fourth sleeve 29 is switched to the release position. When the shift lever 30 is moved to the fourth gear, the position of the third sleeve 28 is switched to the fourth gear position and the position of each of the first sleeve 26, the second sleeve 27, and the fourth sleeve 29 is switched to the release position. When the shift lever 30 is moved to the fifth gear, the position of the third sleeve 28 is switched to the fifth gear position and the position of each of the first sleeve 26, the second sleeve 27, and the fourth sleeve 29 is switched to the release position. When the shift lever 30 is moved to the reverse R, the position of the fourth sleeve 29 is switched to the reverse position and the position of each of the first to third sleeves 26 to 28 is switched to the release position. When the shift lever 30 is moved to the neutral position N, the position of each of the first to fourth sleeves 26 to 29 is switched to the release position. In this case, a power transmission between the input shaft 11 and the output shaft 12 is shut off. Hereinafter, this state is referred to as a neutral state. The shift lever 30 and each sleeve 26 to 29 are connected with each other so as to be interlocked in this manner.

As shown in Fig. 1, the input shaft 11 is connected with the rotor shaft 3a of the MG 3 via a first clutch 40. The first clutch 40 is a well known friction clutch. The first clutch 40 includes a first engaging member 40a which rotates integrally with the input shaft 11 and a second engaging member 40b which rotates integrally with the rotor shaft 3a. The first clutch 40 is configured so as to be allowed to switch its state between an engaged state where the first engaging member 40a and the second engaging member 40b are engaged and rotate integrally with each other and a release state where the first engaging member 40a and the second engaging member 40b are separated from each other. In the engaged state, the input shaft 11 and the rotor shaft 3a rotate at same rotating speed. On the other hand, in the release state, a power transmission between the input shaft 11 and the rotor shaft 3a is shut off. Plural pedals which are operated by feet of the driver is provided on the vehicle 1. As shown in Fig. 3, an accelerator pedal AP, a brake pedal BP, and a clutch pedal CP are provided as the plural pedals. The first clutch 40 is operated by the clutch pedal CP. That is, the first clutch 40 is configured as a manual-type clutch. A distance between the first engaging member 40a and the second engaging member 40b is changed according to an operation amount to the clutch pedal CP. When the clutch pedal CP is not stepped on, the state of the first clutch 40 is switched to the engaged state. And, when the clutch pedal CP is partially stepped on, the state of the first clutch 40 is switched to a state where power is transmitted between the first engaging member 40a and the second engaging member 40b while the first engaging member 40a and the second engaging member 40b rotate at different rotating speeds from each other, that is, a state of a half clutch. And, when the clutch pedal CP is further stepped on, the state of the first clutch 40 is switched to the release state. The relation between the clutch pedal CP and the state of the first clutch 40 is the same as the relation of a case of a well known manual-type clutch. Thereby, a detailed description of the relation will be omitted. Furthermore, the accelerator pedal AP and the brake pedal BP are well known pedals which are provided on a vehicle in general. Thereby, detailed descriptions thereof also will be omitted.

As shown in Fig. 1, the rotor shaft 3a of the MG 3 is connected with an output shaft 2a of the engine 2 via a second clutch 41. The second clutch 41 is a friction clutch. The second clutch 41 is configured so as to be allowed to switch its state between an engaged state where the output shaft 2a and the rotor shaft 3a rotate integrally and a release state where the output shaft 2a and the rotor shaft 3a are separated from each other. Furthermore, the second clutch 41 is also allowed to switch its state to a half clutch which is a state where power is transmitted between the output shaft 2a and the rotor shaft 3a while the output shaft 2a and the rotor shaft 3a rotate at different rotating speeds from each other. The second clutch 41 includes an actuator 41a for switching the state of the second clutch 41. Since the engine 2 is connected with the rotor shaft 3a in this manner, the rotor shaft 3a corresponds to a rotating member of the present invention.

An output gear 4 is provided on the output shaft 12 of the transmission 10 so as to rotate integrally. The output gear 4 is engaged with a ring gear 5a of a differential mechanism 5. The differential mechanism 5 is a well known mechanism which distributes inputted power to the right and left drive wheels 6.

The operations of the engine 2, the MG 3, and the second clutch 41 are controlled by a control apparatus 50. Thereby, the control apparatus 50 corresponds to a control device of the present invention. The control apparatus 50 is configured as a computer unit including a microprocessor and peripheral devices, such as a RAM and a ROM, which are necessary for the operations of the microprocessor. The control apparatus 50 holds various control programs for driving the vehicle 1 appropriately. The control apparatus 50 controls control objects such as the engine 2 and the MG 3 by executing these programs. The control apparatus 50 is connected with various sensors for obtaining information with respect to the vehicle 1. The control apparatus 50 is connected with a vehicle speed sensor 51, an accelerator opening sensor 52, an MG rotating speed sensor 53, and an input shaft rotating speed sensor 54, for example. The vehicle speed sensor 51 outputs a signal corresponding to speed of the vehicle 1 (the vehicle speed). The accelerator opening sensor 52 outputs a signal corresponding to an operation amount to the accelerator pedal AP, that is, an accelerator opening. The MG rotating speed sensor 53 outputs a signal corresponding to a rotating speed of the rotor shaft 3a of the MG 3. The input shaft rotating speed sensor 54 outputs a signal corresponding to a rotating speed of the input shaft 11. In addition, various sensors are further connected to the control apparatus 50, but they are omitted in the figure.

In the vehicle 1, plural traveling modes are realized by controlling the operations of the engine 2, the MG 3, and the second clutch 41. As the plural traveling modes, an EV traveling mode and an engine traveling mode are set, for example. In the EV traveling mode, the MG 3 is functioned as the electric motor while the state of the second clutch 41 is switched to the release state, and the vehicle 1 is driven by the power of the MG 3. In the engine traveling mode, the state of the second clutch 41 is switched to the engaged state, and the vehicle 1 is driven by the power of the engine 2 mainly. In the engine traveling mode, a regenerative power generation is performed by the MG 3 during a deceleration of the vehicle 1, and the engine 2 is assisted by the MG 3 during an acceleration of the vehicle 1. The control apparatus 50 switches the traveling modes based on the vehicle speed, the accelerator opening, and so on. For example, the control apparatus 50 switches the traveling mode to the EV traveling mode when the vehicle 1 starts off or the vehicle 1 is traveling at low speed. On the other hand, the control apparatus 50 switches the traveling mode to the engine traveling mode when the vehicle is traveling at high speed.

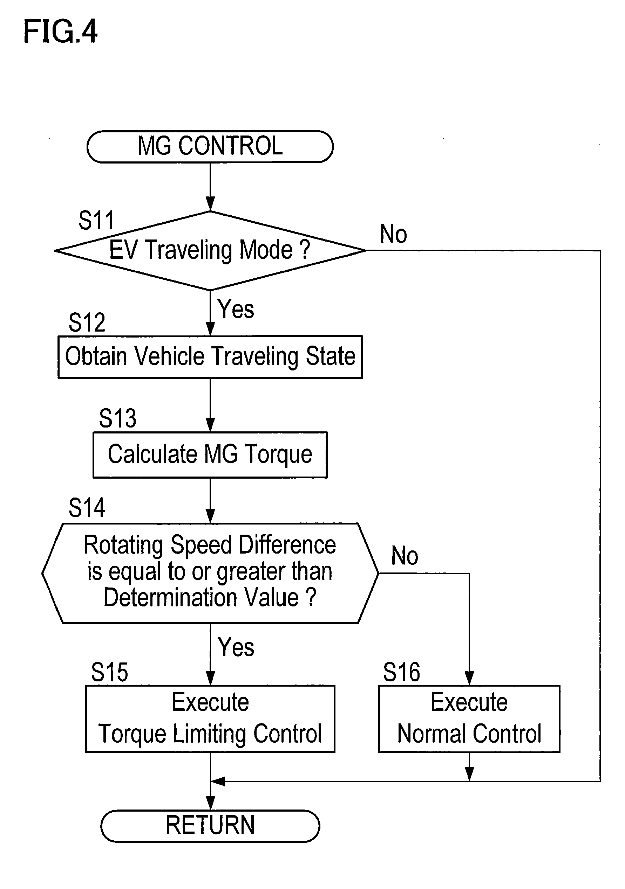

The control apparatus 50 controls the MG 3 so that a difference between the rotating speed of the MG 3 and the rotating speed of the input shaft 11 of the transmission 10 is within a predetermined determination range when making the vehicle 1 travel in the EV traveling mode. Fig. 4 shows an MG control routine which the control apparatus 50 executes for controlling the MG 3 in this manner. The control apparatus 50 repeatedly executes this control routine at predetermined intervals regardless of the traveling state of the vehicle 1.

In the control routine, the control apparatus 50 first determines whether or not the present traveling mode is the EV traveling mode in step S11. When the control apparatus 50 determines that the present traveling mode is not the EV traveling mode, the control apparatus 50 ends the present control routine. On the other hand, when the control apparatus 50 determines that the present traveling mode is the EV traveling mode, the control apparatus 50 goes to the step S12 and obtains the traveling state of the vehicle 1. The vehicle control apparatus 30 obtains the vehicle speed, the accelerator opening, the rotating speed of the MG 3, the rotating speed of the input shaft 11, and so on as the traveling state of the vehicle 1. In the next step S13, the control apparatus 50 calculates torque (an MG torque) to be output from the MG 3 in the present traveling state. The MG torque may be calculated based on the rotating speed of the MG 3, the accelerator opening, and the like by using a well known method. Thereby, detailed description with regard to the calculation method of the MG torque will be omitted.

In the next step S14, the control apparatus 50 determines whether or not an absolute value (hereinafter, referred to as a rotating speed difference) of a value obtained by subtracting the rotating speed of the input shaft 11 of the transmission 10 from the rotating speed of the rotor shaft 3a of the MG 3 is equal to or greater than a predetermined determination value. The determination value is set to 50 r. p. m., for example. When the control apparatus 50 determines that the rotating speed difference is equal to or greater than the determination value, the control apparatus 50 goes to step S15 and executes a torque limiting control. In the torque limiting control, the MG 3 is controlled so that the rotating speed difference is less than the determination value. In particular, by limiting the torque which is output from the MG 3, the rotating speed difference is decreased. Thereafter, the control apparatus 50 ends the present control routine.

On the other hand, when the control apparatus 50 determines that the rotating speed difference is less than the determination value, the control apparatus 50 goes to step S16 and executes a normal control. In the normal control, the MG 3 is controlled so that the calculated torque is output from the MG 3. Thereafter, the control apparatus 50 ends the present control routine.

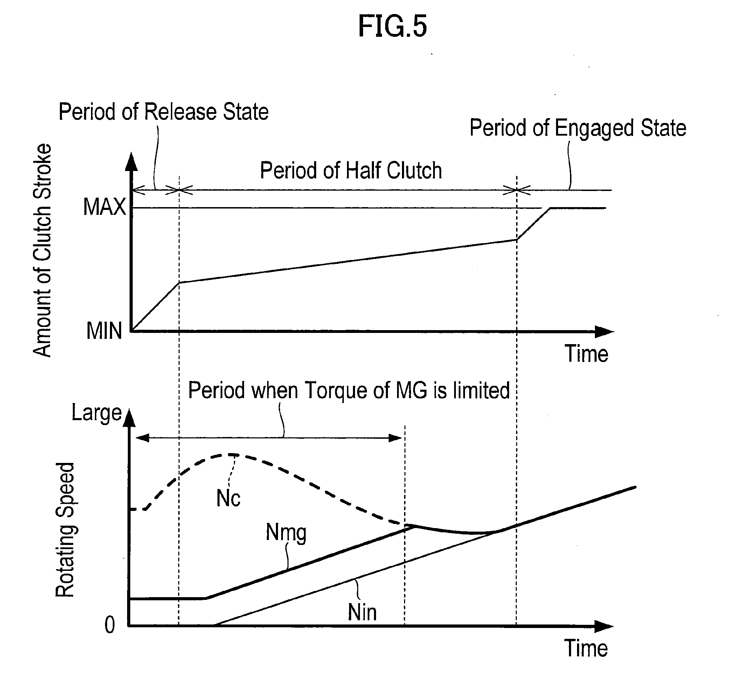

Fig. 5 shows a temporal variations of an amount of a clutch stroke of the first clutch 40, the rotating speed of the MG 3, and the rotating speed of the input shaft 11 of the transmission 10 at the time of the vehicle 1 starts off. The amount of the clutch stroke correlates with the distance between the first engaging member 40a and the second engaging member 40b. When the amount of the clutch stroke is minimum, the distance between the first engaging member 40a and the second engaging member 40b is maximum. That is, in this case, the first clutch 40 is in the release state. On the other hand, when the amount of the clutch stroke is maximum, the distance between the first engaging member 40a and the second engaging member 40b is 0. That is, in this case, the first clutch 40 is in the engaged state. A line Nmg in the graph shows the rotating speed of the MG 3. A line Nin shows the rotating speed of the input shaft 11. Furthermore, in the graph, the torque of the MG 3 of a case that the torque limiting control is not executed is shown as a comparative example. A line Nc in the graph shows the comparative example.

As is obvious from this graph, in the case that the torque limiting control is not executed, the rotating speed of the MG 3 increases immediately at the time of the vehicle 1 starts off. Thereby, the rotating speed difference increases when the first clutch 40 is in the half clutch. As well known, when the clutch is in the half clutch, a part of the energy which is transmitted to the first clutch 40 is consumed by friction heat. And, the energy which is consumed by the friction heat increases as the rotating speed difference increases. Accordingly, in the comparative example, much energy is consumed in the first clutch 40. On the other hand, in the present invention, the MG 3 is controlled so that the rotating speed difference is less than the determination value. Thereby, it is possible to decrease the energy which is consumed in the first clutch 40 while the torque of the MG 3 is transmitted to the input shaft 11 by the first clutch 40.

As described above, according to the present invention, since the MG 3 is controlled so that the rotating speed difference is less than the determination value in the EV traveling mode, it is possible to decrease the energy which is consumed in the first clutch 40. Thereby, it is possible to improve fuel efficiency of the vehicle 1. Furthermore, it is possible to retard the progress of abrasion of the first clutch 40. Thereby, it is possible to extend the life of the first clutch 40. In addition, in the present invention, it is not necessary to prepare a sensor for detecting a state of the first clutch 40. Thereby, it is possible to suppress increase of the costs.

By executing the MG control routine of Fig. 5, the control apparatus 50 functions as a torque limiting device of the present invention.

The determination value which is used in the MG control routine is not limited to the above value. For example, the determination value may be changed appropriately depending on the present traveling state of the vehicle 1. Furthermore, the determination value may be set based on the traveling state of the vehicle 1 so that the energy which is consumed in the first clutch 40 when the vehicle 1 is driven by the MG 3 is less than the energy which is consumed in the first clutch 40 when the vehicle 1 is driven by the engine 2. In this case, first, it is assumed that the vehicle 1 is driven by only the engine 2 at the present time. And, the rotating speed of the engine 2 is estimated in the present traveling state of the vehicle 1. The rotating speed of the engine 2 may be estimated by using a well known method based on the present accelerator opening, the present vehicle speed, and so on. The determination value may be set to a value obtained by subtracting the present rotating speed of the input shaft 11 from the estimated rotating speed of the engine 2. By setting the determination value in this manner, it is possible to decrease the energy which is consumed in the first clutch 40 when the vehicle 1 is driven by the MG 3 than the energy which is consumed in the first clutch 40 when the vehicle 1 is driven by the engine 2. Furthermore, the determination value may be set to a value which is less than the value obtained by subtracting the present rotating speed of the input shaft 11 from the estimated rotating speed of the engine 2. A setting of the determination value may be executed in the step S12 or the step S13 in the Fig. 4. By setting the determination value in these processes, the control apparatus 50 functions as a determination value setting device of the present invention.

The present invention is not limited to the above-described embodiment, and various modifications of the present invention may be provided. For example, the transmission of the vehicle to which the present invention is applied is not limited to a transmission the top gear of which is a 5th gear. The transmission may be a transmission the top gear of which is a 4th gear or less, or 6th gear or more, for example. Furthermore, the vehicle which is applied to the present invention may have an electric motor in place of the motor generator.

The vehicle to which the present invention is applied is not limited to the vehicle which is shown in the above embodiment. For example, it is possible to apply to the present invention, a vehicle where: a rotating member such as a rotating shaft is connected with an input shaft of a manual transmission via a manual-type clutch; a motor generator is connected with the rotating member; and an internal combustion engine is connected with the rotating member via an automatic clutch.

## Claims

1. A control apparatus which is applied to a hybrid vehicle, the hybrid vehicle including:
a manual transmission having plural shift stages where different gear ratios from each other are set and the shift stages are switched from each other in response to an operation of a shift lever;
a rotating member being connected with an input shaft of the manual transmission via a friction type first clutch actuating in response to an operation of stepping on a clutch pedal;
an electric motor being connected with the rotating member so as to be allowed to transmit power; and
an internal combustion engine being connected with the rotating member via a second clutch, wherein
the control apparatus includes a control device which controls operations of the electric motor, the internal combustion engine, and the second clutch, and
the control device includes a torque limiting device which limits torque of the electric motor so that a difference between a rotating speed of the input shaft of the manual transmission and a rotating speed of the rotating member is equal to or less than a predetermined determination value, when an EV traveling mode where a state of the second clutch is switched to a release state where power transmission between the internal combustion engine and the rotating member is shut off and the vehicle is driven by the electric motor is executed.

2. The control apparatus according to claim 1, wherein
the control device further includes a determination value setting device which sets the determination value based on a traveling state of the vehicle, and
the determination value setting device, when the EV traveling mode is executed, estimates a rotating speed of the internal combustion engine in a present traveling state of the vehicle based on the traveling state of the vehicle on an assumption that the vehicle is driven by the internal combustion engine; and sets the determination value to a value obtained by subtracting a present rotating speed of the input shaft of the manual transmission from the rotating speed estimated.
